# EUROPEAN PATENT APPLICATION

(11) **EP 2 966 546 A1**
(43) Date of publication of application: **13.01.2016**
(21) Application number: 15172325.1
(22) Date of filing: 16.06.2015
(51) Int. Cl.: G06F 3/01

(54) **MANAGEMENT METHODS AND SYSTEMS FOR MOVEMENT DETECTION**

(30) Priority: 08.07.2014 TW 103123407
(71) Applicant: Noodoe Corporation, Taipei City 115 (TW)
(72) Inventor: Hsu, Chih-Feng, 115 Taipei City (TW)
(74) Representative: Karakatsanis, Georgios

(57) **Abstract**

Management methods and systems (100) for movement detection are provided. First, the movement of an electronic device is detected by at least one sensor (110). In response to a specific instruction, a specific movement of the electronic device after the specific instruction is received is recorded. A motion determination process is performed according to the recorded specific movement.

## Description

### BACKGROUND

### Technical Field

The disclosure relates generally to management methods and systems for movement detection, and, more particularly to management methods and systems for movement detection that can avoid misjudging motion.

### Description of the Related Art

Recently, electronic devices, such as smart phones, notebooks, wearable devices, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

Currently, an electronic device can have at least one motion sensor, such as an accelerometer or a Gyro sensor for detecting a motion of the electronic device. The motion detected by the motion sensor can be used for various applications. For example, the browsing mode of the electronic device can be adjusted between a portrait mode and a landscape mode according to the detected motion. In another example, a command can be generated according to the detected motion, and the command can be used to activate a specific application on the electronic device.

Unfortunately, since the electronic device is always carried by a user, the electronic device moves with the movement of the user, such that the motion sensor of the electronic device always detects unintentional motions of the user, resulting in misjudging motion. Conventionally, the problem of misjudging motion can be reduced by using a proximity sensor of the electronic device. For example, when an object is detected by the proximity sensor, for instance when the electronic device is put in a pocket, the electronic device will cancel the motion detection function to avoid misjudging motion.

However, in some cases, the user will hold the electronic device by a hand, or wear the electronic device on the user's body. In these cases, since no object is detected by the proximity sensor, misjudging motion occurs frequently. Furthermore, since no object is detected by the proximity sensor, the motion sensor continuously detects the motion of the electronic device, resulting in a waste of system resources.

### SUMMARY

Management methods and systems for movement detection are provided, wherein a motion determination process can be performed according to an instruction received by an electronic device, thereby reducing the occurrence of misjudging motion.

In an embodiment of a management method for movement detection, the movement of an electronic device is detected by at least one sensor. Then, a specific instruction is received, and in response to a specific instruction, a specific movement of the electronic device after the specific instruction is received is recorded. A motion determination process is performed according to the recorded specific movement.

An embodiment of a management system for movement detection comprises a sensor, a reception unit, and a processing unit. The sensor detects the movement of an electronic device. The reception unit receives a specific instruction. In response to the specific instruction, the processing unit records a specific movement of the electronic device after the specific instruction is received, and performs a motion determination process according to the recorded specific movement.

In some embodiments, a prompt is generated when the specific instruction is received, and the specific movement is recorded after the end of the prompt.

In some embodiments, when the prompt is generated, a shaking animation is displayed via a display unit of the electronic device, and the prompt ends when the picture stops shaking.

In some embodiments, when the prompt is generated, a vibration or a sound is generated via the electronic device, and the prompt ends when the vibration or the sound ends.

In some embodiments, it is determined whether the movement of the electronic device matches with a specific motion, or whether the orientation of the electronic device matches with or substantially matches with a specific orientation. When the movement of the electronic device matches with the specific motion, or the orientation of the electronic device matches with or substantially matches with the specific orientation, the specific instruction is generated.

In some embodiments, the specific instruction is generated when an event is received from a specific electronic device.

In some embodiments, in response to the specific instruction, the operational mode of the sensor is changed from a first operational mode to a second operational mode, and the specific movement of the electronic device is obtained in the second operational mode, wherein the sample rate of the sensor in the first operational mode and that in the second operational mode are different.

In some embodiments, the sample rate of the sensor in the second operational mode is higher than that in the first operational mode.

Management methods for movement detection may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a management system for movement detection of the invention;
Fig. 2 is a flowchart of an embodiment of a management method for movement detection of the invention;
Fig. 3 is a flowchart of another embodiment of a management method for movement detection of the invention;
Fig. 4 is a flowchart of another embodiment of a management method for movement detection of the invention;
Fig. 5 is a flowchart of an embodiment of a method for generating a specific instruction of the invention;
Fig. 6 is a flowchart of another embodiment of a method for generating a specific instruction of the invention; and
Fig. 7 is a flowchart of another embodiment of a method for generating a specific instruction of the invention.

### DETAILED DESCRIPTION OF THE INVENTION

Management methods and systems for movement detection are provided.

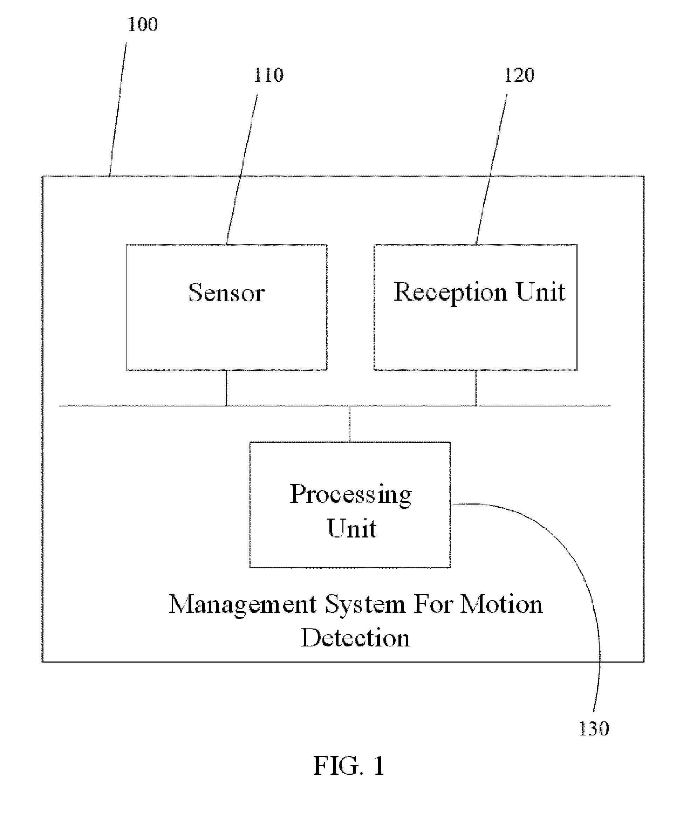

Fig. 1 is a schematic diagram illustrating an embodiment of a management system for movement detection of the invention. The management system for movement detection 100 can be used in an electronic device. In some embodiments, the electronic device may be a portable device, such as a mobile phone, a smart phone, a PDA (Personal Digital Assistant), a GPS (Global Positioning System), a notebook, a tablet computer, or a wearable device.

The management system for movement detection 100 comprises at least one sensor 110, a reception unit 120, and a processing unit 130. The sensor 110 can detect the orientation and the movement of an electronic device. It is noted that, in some embodiments, the orientation comprises angle information corresponding to the electronic device in reference to at least one reference point. In some embodiments, the orientation can be represented as an included angle between an axis which is vertical to at least one plane of the electronic device and the direction of gravity. The movement can be represented by the variation of the orientation in a predefined interval. In some embodiments, the sensor 110 may be an accelerometer such as a G-sensor for generating information of velocity and displacement when the electronic device moves. In some embodiments, the sensor 110 may be a Gyro sensor for generating information of angular acceleration when the electronic device moves. It is noted that, the above sensors are only examples of the present invention, and the present invention is not limited thereto. Any sensor which can detect the orientation and the movement of an electronic device can be applied in the present invention. The reception unit 120 can receive an instruction input to the electronic device. It is understood that, in some embodiments, the reception unit 120 may be the above sensor. In some embodiments, the reception unit 120 may be a sound reception unit for receiving a sound near the electronic device. In some embodiments, the reception unit 120 may be a button, wherein an instruction is received when the button is triggered. In some embodiments, the reception unit 120 may be an optical unit, such as an IR sensor or an image capture unit for detecting an appearance corresponding to an object. In some embodiments, the reception unit 120 may be a touch-sensitive device for detecting a contact on the touch-sensitive device. That is the instruction received by the reception unit 120 can comprise an orientation, a movement, a sound, a trigger corresponding to a button, an appearance corresponding to an object, and/or a contact on a touch-sensitive device. It is noted that, the above reception units and the received instructions are examples of the application, and the present invention is not limited thereto. The processing unit 130 can control related operations of hardware and software in the electronic device, and perform the management methods for motion detection of the invention, which will be discussed later.

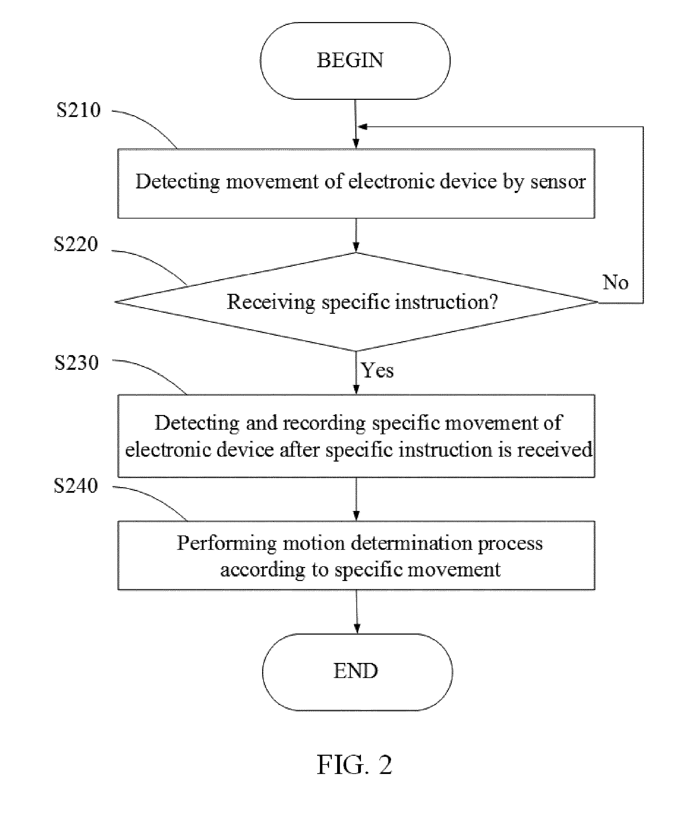

Fig. 2 is a flowchart of an embodiment of a management method for motion detection of the invention. The management method for motion detection can be used in an electronic device, such as a mobile phone, a smart phone, a PDA, a GPS, a notebook, a tablet computer, a wearable device, or other portable device.

In step S210, the movement of the electronic device is detected by at least one sensor. It is understood that, in some embodiments, the sensor may be an accelerometer. In some embodiments, the sensor may be a Gyro sensor. It is noted that, the above sensors are only examples of the present invention, and the present invention is not limited thereto. Any sensor which can detect the orientation and the movement of an electronic device can be applied in the present invention. In step S220, it is determined whether a specific instruction is received. It is noted that, the specific instruction can be defined in the electronic device. It is understood that, in some embodiments, the received instruction comprises an orientation, a movement, a sound, a trigger corresponding to a button, an appearance corresponding to an object, and/or a contact on a touch-sensitive device. It is noted that, the above instructions are examples of the application, and the present invention is not limited thereto. When the specific instruction is not received (No in step S220), the procedure returns to step S210. When the specific instruction is received (Yes in step S220), in step S230, a specific movement of the electronic device after the specific instruction is received is detected by the sensor, and recorded, and in step S240, a motion determination process is performed according to the recorded specific movement. It is understood that, in some embodiments, in the motion determination process, it is determined whether the specific movement matches with any one of predefined motions. When the specific movement matches with a specific predefined motion, a process, such as activation of a specific application and/or generation of specific data corresponding to the specific predefined motion is performed. It is understood that, the above processes are examples of the application, and the present invention is not limited thereto.

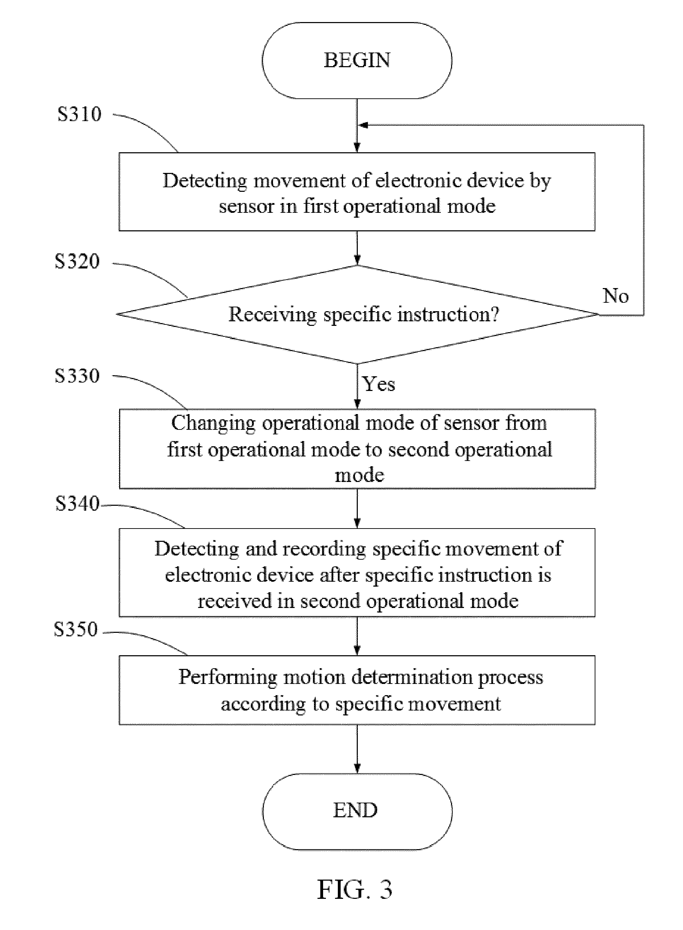

Fig. 3 is a flowchart of another embodiment of a management method for motion detection of the invention. The management method for motion detection can be used in an electronic device, such as a mobile phone, a smart phone, a PDA, a GPS, a notebook, a tablet computer, a wearable device, or other portable device.

In step S310, the movement of the electronic device is detected by at least one sensor in a first operational mode. It is noted that, in some embodiments, the sensor may have several operational modes, and the sample rate in respective operational modes may be different. By using various operational modes with different sample rates, the power needed for the sensor may be reduced. For example, the power needed for the sensor in a first operational mode with a lower sample rate is less than that in a second operational mode with a higher sample rate. It is understood that, in some embodiments, the sensor may be an accelerometer. In some embodiments, the sensor may be a Gyro sensor. It is noted that, the above sensors are only examples of the present invention, and the present invention is not limited thereto. Any sensor which can detect the orientation and the movement of an electronic device can be applied in the present invention. In step S320, it is determined whether a specific instruction is received. It is noted that, the specific instruction can be defined in the electronic device. Similarly, in some embodiments, the received instruction comprises an orientation, a movement, a sound, a trigger corresponding to a button, an appearance corresponding to an object, and/or a contact on a touch-sensitive device. It is noted that, the above instructions are examples of the application, and the present invention is not limited thereto. When the specific instruction is not received (No in step S320), the procedure returns to step S310. When the specific instruction is received (Yes in step S320), in step S330, the operational mode of the sensor is changed from the first operational mode to a second operational mode. It is understood that, in some embodiments, the sample rate of the sensor in the second operational mode is higher than that in the first operational mode. In step S340, a specific movement of the electronic device after the specific instruction is received is detected by the sensor in the second operational mode, and recorded, and in step S350, a motion determination process is performed according to the recorded specific movement. Similarly, in some embodiments, in the motion determination process, it is determined whether the specific movement matches with any one of predefined motions. When the specific movement matches with a specific predefined motion, a process corresponding to the specific predefined motion is performed. It is understood that, the present invention is not limited to any process.

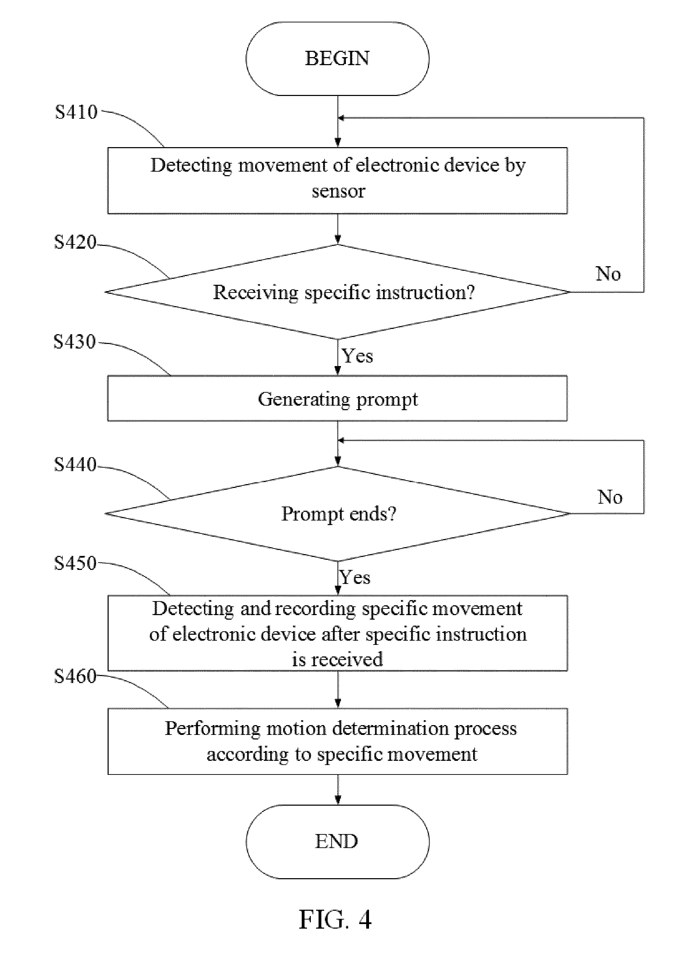

Fig. 4 is a flowchart of another embodiment of a management method for motion detection of the invention. The management method for motion detection can be used in an electronic device, such as a mobile phone, a smart phone, a PDA, a GPS, a notebook, a tablet computer, a wearable device, or other portable device.

In step S410, the movement of the electronic device is detected by at least one sensor. Similarly, in some embodiments, the sensor may be an accelerometer. In some embodiments, the sensor may be a Gyro sensor. It is noted that, the above sensors are only examples of the present invention, and the present invention is not limited thereto. Any sensor which can detect the orientation and the movement of an electronic device can be applied in the present invention. In step S420, it is determined whether a specific instruction is received. It is noted that, the specific instruction can be defined in the electronic device. Similarly, in some embodiments, the received instruction comprises an orientation, a movement, a sound, a trigger corresponding to a button, an appearance corresponding to an object, and/or a contact on a touch-sensitive device. It is noted that, the above instructions are examples of the application, and the present invention is not limited thereto. When the specific instruction is not received (No in step S420), the procedure returns to step S410. When the specific instruction is received (Yes in step S420), in step S430, a prompt is generated. It is noted that, the prompt can be used to notify the user that the sensor will be going to start the motion detection. It is understood that, in some embodiments, the prompt may be a picture, a vibration, and/or a sound. Then, in step S440, it is determined whether the prompt ends. It is understood that, in some embodiments, when the prompt is generated, a shaking animation is displayed via a display unit of the electronic device, and the prompt ends when the picture stops shaking. In some embodiments, when the prompt is generated, a vibration or a sound is generated via the electronic device, and the prompt ends when the vibration or the sound ends. When the prompt does not end (No in step S440), the procedure remains at step S440. When the prompt ends (Yes in step S440), in step S450, a specific movement of the electronic device after the specific instruction is received is detected by the sensor, and recorded, and in step S460, a motion determination process is performed according to the recorded specific movement. Similarly, in some embodiments, in the motion determination process, it is determined whether the specific movement matches with any one of predefined motions. When the specific movement matches with a specific predefined motion, a process corresponding to the specific predefined motion is performed. It is understood that, the present invention is not limited to any process.

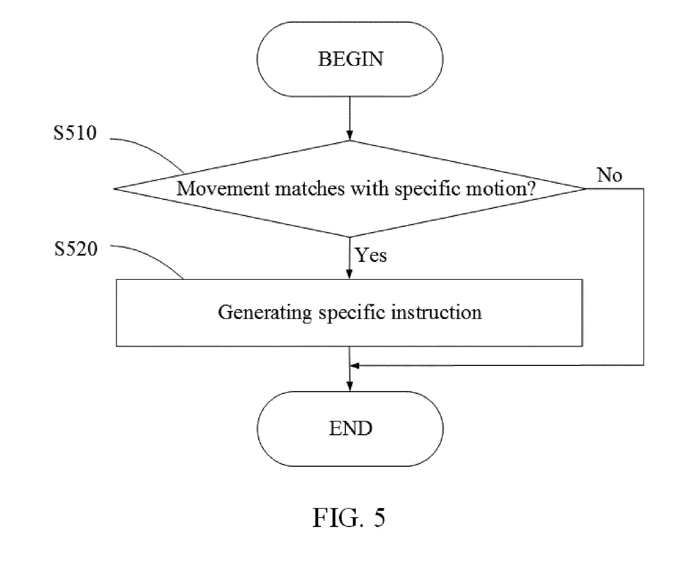

Fig. 5 is a flowchart of an embodiment of a method for generating a specific instruction of the invention. In step S510, it is determined whether the movement of the electronic device matches with a specific motion. It is understood that, in some embodiments, the specific motion may be a motion representing that an electronic device worn on the arm of a user is lifted up to a visible area in front of the chest of the user. It is noted that, in some embodiments, the variation of data, such as displacement, velocity, and/or angular acceleration detected by the sensor in a predefined interval can be recorded. In some embodiments, the determination of whether the electronic device generates a specific motion can be performed by determining whether the variation of data corresponding to the electronic device in the predefined interval matches with a predefined variation corresponding to the specific motion. When the variation of data corresponding to the electronic device in the predefined interval matches with the predefined variation, it is determined that the electronic device generates the specific motion. When the movement of the electronic device does not match with the specific motion (No in step S510), the procedure is terminated. When the movement of the electronic device matches with the specific motion (Yes in step S510), in step S520, the specific instruction is generated in the electronic device.

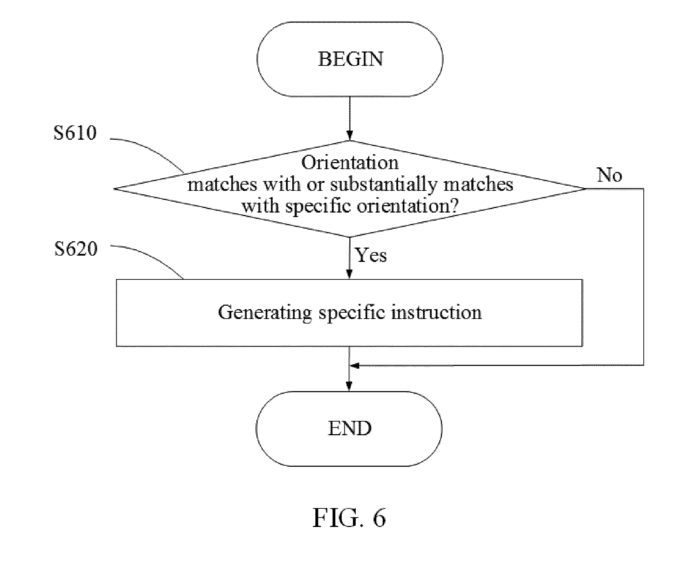

Fig. 6 is a flowchart of another embodiment of a method for generating a specific instruction of the invention. In step S610, it is determined whether the orientation of the electronic device matches with or substantially matches with a specific orientation. It is understood that, in some embodiments, the specific orientation may be the last orientation of an electronic device, in which the electronic device is worn on the arm of a user, and is lifted up to a visible area in front of the chest of the user. When the orientation of the electronic device does not match with the specific orientation (No in step S610), the procedure is terminated. When the orientation of the electronic device matches with or substantially matches with the specific orientation (Yes in step S610), in step S620, the specific instruction is generated in the electronic device.

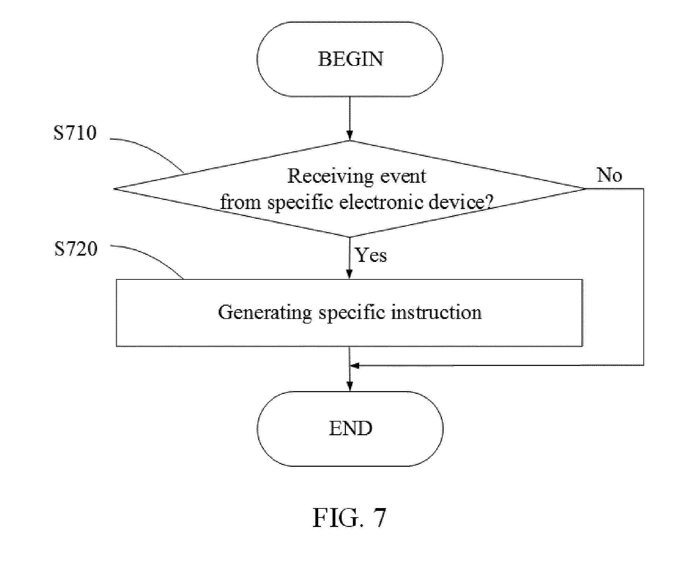

Fig. 7 is a flowchart of another embodiment of a method for generating a specific instruction of the invention. In step S710, it is determined whether the electronic device receives an event from a specific electronic device. It is understood that, in some embodiments, the electronic device may be a wearable electronic device, which connects with a specific electronic device, such as a smart phone via a wireless network, such as Wi-Fi or Bluetooth network. In some embodiments, the event received by the electronic device may be a call, a message, specific information, such as weather information, and/or any notification. When the electronic device does not receive an event from the specific electronic device (No in step S710), the procedure is terminated. When the electronic device receives an event from the specific electronic device (Yes in step S710), in step S720, the specific instruction is generated in the electronic device.

It is understood again, as described, the received specific instruction can comprise an orientation, a movement, a sound, a trigger corresponding to a button, an appearance corresponding to an object, and/or a contact on a touch-sensitive device. The manners for generating the specific instruction are examples of the application, and the present invention is not limited thereto.

Therefore, the management methods and systems for motion detection of the present invention can perform a motion determination process according to an instruction received by an electronic device, thereby reducing the occurrence of motion misjudging, and further reducing the power consumption of the electronic device.

Management methods for motion detection may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A management method for motion detection for use in an electronic device, comprising:
detecting the movement of an electronic device by at least one sensor;
receiving a specific instruction;
in response to a specific instruction, recording a specific movement of the electronic device after the specific instruction is received; and
performing a motion determination process according to the recorded specific movement.

2. The method of claim 1, further comprising:
generating a prompt when the specific instruction is received; and
recording the specific movement after the end of the prompt.

3. The method of claim 2, wherein when the prompt is generated, a shaken picture is displayed via a display unit of the electronic device, and the prompt ends when the picture stops shaking.

4. The method of claim 2, wherein when the prompt is generated, a vibration or a sound is generated via the electronic device, and the prompt ends when the vibration or the sound ends.

5. The method of claim 1, 2, 3 or 4, further comprising:
determining whether the movement of the electronic device matches with a specific motion, or whether the orientation of the electronic device matches with or substantially matches with a specific orientation; and
when the movement of the electronic device matches with the specific motion, or the orientation of the electronic device matches with or substantially matches with the specific orientation, generating the specific instruction.

6. The method of claim 1, 2, 3, 4 or 5, further comprising generating the specific instruction when an event is received from a specific electronic device.

7. The method of claim 1, 2, 3, 4, 5 or 6, further comprising driving the sensor to change the operational mode of the sensor from a first operational mode to a second operational mode, and obtaining the specific movement of the electronic device in the second operational mode, wherein the sample rate of the sensor in the first operational mode and that in the second operational mode are different.

8. The method of claim 7, wherein the sample rate of the sensor in the second operational mode is higher than that in the first operational mode.

9. A management system (100) for motion detection for use in an electronic device, comprising:
a sensor (110) detecting the movement of the electronic device;
a reception unit (120) receiving a specific instruction; and
a processing unit (130), in response to the specific instruction, recording a specific movement of the electronic device after the specific instruction is received, and performing a motion determination process according to the recorded specific movement.

10. A machine-readable storage medium comprising a computer program, which, when executed, causes a device to perform a management method for motion detection for use in an electronic device, wherein the method comprises:
detecting the movement of an electronic device by at least one sensor;
receiving a specific instruction;
in response to a specific instruction, recording a specific movement of the electronic device after the specific instruction is received; and
performing a motion determination process according to the recorded specific movement.
